# EUROPÄISCHE PATENTSCHRIFT

(11) **EP 0 899 184 B1**
(45) Veröffentlichungstag und Bekanntmachung des Hinweises auf die Patenterteilung: **29.10.2003**
(21) Anmeldenummer: 98115137.6
(22) Anmeldetag: 12.08.1998
(51) Int. Cl.: B62D 25/08

(54) **Vorrichtung zur Versteifung einer Fahrzeugkarosserie im Bereich des hinteren Radhauses**
Arrangement for stiffening a vehicle structure in the region of the rear wheel house
Disposition pour le renforcement d'une carrosserie dans la zone du passage de roue arrière

(30) Priorität: 27.08.1997 DE 19737242
(43) Veröffentlichungstag der Anmeldung: 03.03.1999
(73) Patentinhaber: ADAM OPEL AG, 65423 Rüsselsheim (DE)
(72) Erfinder: Uptmoor, Manfred, Dipl.-Ing., 67808 Mörsfeld (DE); Schütt, Karl-Peter, Dipl.-Ing., 65428 Rüsselsheim (DE); Eck, Ludwig, Dipl.-Ing. (FH), 55124 Mainz (DE); Blüchel, Thomas, Dipl.-Ing., 55130 Mainz (DE); Faisst, Werner, Dipl.-Ing., 55118 Mainz (DE)

(56) Entgegenhaltungen:
- GB-A- 2 308 104
- US-A- 4 950 025
- US-A- 5 364 128

## Beschreibung

Die Erfindung bezieht sich auf eine Vorrichtung zur Versteifung einer Fahrzeugkarosserie im Bereich des hinteren Radhauses, wobei die Fahrzeugkarosserie in diesem Bereich aus einem Bodenblech mit einem seitlichen Radausschnitt und einem unter dem Bodenblech angeordneten, innen am Radausschnitt vorbeilaufenden Längsträger besteht.

Hierbei handelt es sich um die übliche Ausgestaltung des rückwärtigen Bereiches einer Fahrzeugkarosserie, wobei das Bodenblech den Boden eines Kofferraumes bildet. Die Längsträger bilden dabei eine Tragstruktur, die bei einer Fahrzeugkollision in der Lage ist, Verformungsenergie aufzunehmen. Je heftiger die Kollision erfolgt, desto stärker werden Bereiche verformt, die weiter vorne im Fahrzeug liegen, also in Längsrichtung des Fahrzeuges betrachtet auf Höhe der Hinterräder oder noch vor diesen. Wenn bei einer Kollision diese Bereiche in Mitleidenschaft gezogen werden, bricht auch das Radhaus zusammen, was zwar im Sinne einer optimalen Energieaufnahme nicht ungünstig ist, aber aus dem folgenden Grund vermieden werden sollte: Bei Fahrzeugen, bei denen sich der Tankeinfüllstutzen seitlich am Fahrzeug hinter dem Radausschnitt befindet und der Tank mittig im Fahrzeug vor der Hinterachse liegt, wird das Tankrohr zwischen Tankeinfüllstutzen und Tank in der Regel durch das Radhaus verlegt.

Es besteht somit das Problem, diesen Bereich der Karosserie so zu gestalten, daß bei heftigen Kollisionen das Radhaus zwar nicht intakt bleibt, aber zumindest nur soweit zusammengedrückt wird, daß eine Beschädigung des Tankrohres unterbleibt.

Um dieses Problem zu lösen, schlägt die Erfindung vor, ein Versteifungselement unterhalb des Bodenblechs, seitlich des Längsträgers hinter dem Radausschnitt anzuordnen, das eine an der hinteren Kante des Radausschnitts anschließende Stützfläche aufweist.

Durch diese Maßnahme wird erreicht, daß die Karosseriestruktur im Bereich des Radausschnitts und insbesondere hinter dem Radausschnitt bei einer Kollision am Fahrzeugrad abgestützt wird, wodurch im Sinne der Problemstellung einem zu starken Zusammenbrechen des Radhauses entgegengewirkt wird.

Besonders wirkungsvoll ist die Versteifung dann, wenn eine (Stütz-)Wand des Versteifungselementes, die die Stützfläche aufweist, über eine Strebe nach hinten abgestützt ist.

Vorzugsweise besteht die Strebe aus einer weiteren Wand, die zusammen mit der Stützwand eine Art Keil bildet, wobei die die Strebe bildende Versteifungswand an der unteren Kante der Stützwand anschließt und sich nach oben und hinten in Richtung auf das Bodenblech erstreckt.

Um insbesondere eine Versteifung des Längsträgers zu erzielen, wird die Stützwand mittels eines seitlichen Flansches am Längsträger und das freie Ende der Versteifungswand mittels einer Lasche ebenfalls am Längsträger befestigt. Außerdem kann sowohl das obere Ende der Stützwand als auch das freie Ende der Versteifungswand mit dem Bodenblech verbunden werden. Zusätzlich kann eine Befestigung an der Seitenwand des Fahrzeuges erfolgen.

Das Versteifungselement kann durch zwei weitere Maßnahmen stabil ausgebildet werden: Zum einen können Sicken vorgesehen werden, die durchgehend in Stützwand und Versteifungswand verlaufen. Zum anderen können in der Versteifungswand ein oder mehrere mit einem aufgestellten Rand versehene Löcher ausgestanzt werden. Diese Löcher führen außerdem zu einer Gewichtsersparnis und ermöglichen es, Schweißwerkzeuge an die entsprechenden Stellen zu führen.

Um besonders im unmittelbaren Anschluß an den Radausschnitt eine innige Verbindung der Stützwand mit dem Längsträger zu erreichen, reicht die Stützwand unter den Längsträger und weist einen seitlichen Ausstellbereich auf, der mit seiner Oberkante an der Unterseite des Längsträgers befestigt wird.

Wenn auch, wie oben erläutert, der Einsatz einer solchen Versteifung vorzugsweise auf der Seite des Fahrzeuges mit dem Tankeinfüllstutzen erfolgen sollte; kann die Maßnahme aber auch auf der anderen Seite des Fahrzeugs vorgesehen werden. Die Versteifungsmaßnahme hat nämlich generell den Vorteil, daß Stoßkräfte am Radhaus vorbei in einen vor der Hinterachse des Fahrzeuges liegenden Bereich geleitet werden, der Verformungsenergie gezielter aufnehmen kann.

Bei der Ausbildung des Versteifungselementes kommt es entscheidend darauf an, daß es sich erstens am Rad abstützen kann und zweitens an einem Teilstück des Längsträgers befestigt ist, das, um am Radausschnitt vorbeilaufen zu können, in diesem Bereich vom Heck des Fahrzeuges aus gesehen nach unten und innen verläuft und aus diesem Grund in diesem Bereich leicht zum Ausknicken neigt.

Die Erfindung soll im folgenden anhand eines Ausführungsbeispiels näher erläutert werden. Dabei zeigen
- Fig. 1:: das Bodenblech eines Fahrzeuges sowie einen Längsträger, um die Anordnung des Versteifungselementes darzustellen;
- Fig. 2:: eine Einzeldarstellung des Versteifungselementes und
- Fig. 3:: die Anbindung des Versteifungselementes an Längsträger, Bodenblech und Seitenwand.

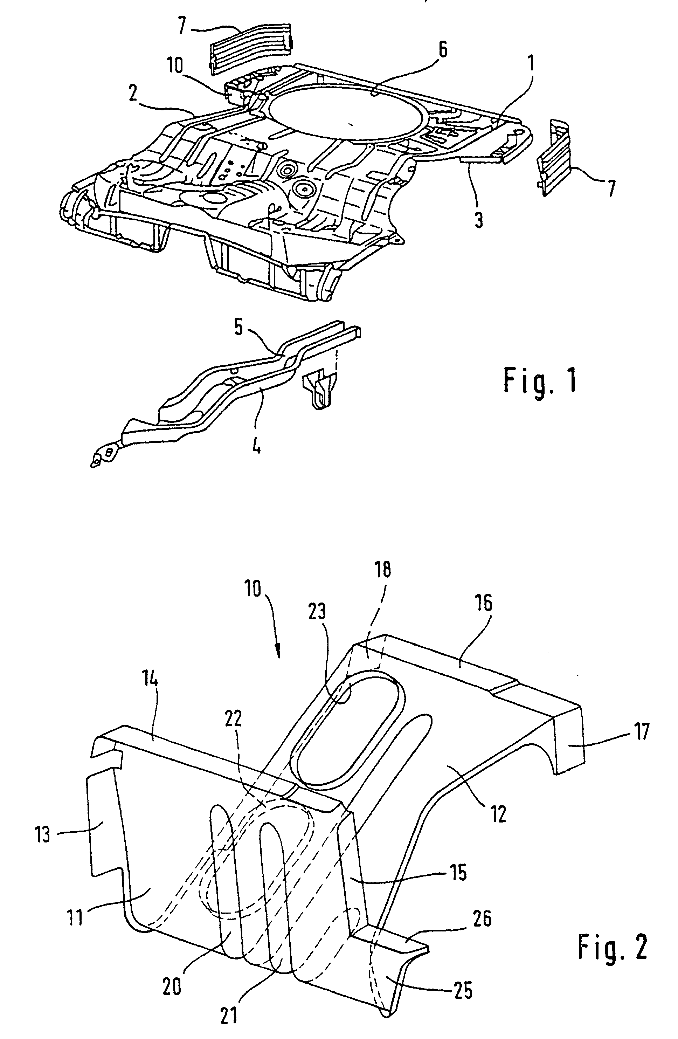

Zunächst wird auf die Fig. 1 Bezug genommen.

Fig. 1 zeigt ein Bodenblech 1 für den rückwärtigen Teil eines Fahrzeuges, der sich vom Heck des Fahrzeuges bis in die Fahrgastzelle erstreckt, wobei der Heckbereich des Bodenblechs 1 etwas höher liegt als der Bereich in der Fahrgastzelle. Im Übergang zwischen Heck und Fahrgastzelle befinden sich links und rechts im Bodenblech 1 zwei Radausschnitte 2, 3, die der Aufnahme von sogenannten Radhäusern dienen, in denen die Hinterräder des Fahrzeuges angeordnet sind. Unterhalb des Bodenblechs 1 verlaufen zwei Längsträger, von denen nur der rechte dargestellt und mit dem Bezugszeichen 4 versehen ist. Bei den Längsträgern handelt es sich um U-förmige nach oben offene Profile, die sich vom Heck des Fahrzeuges bis in den Fahrgastzellenbereich erstrecken und die innen an den Radausschnitten 2, 3 vorbeilaufen. Da die Abschlußbereiche der Längsträger gegenüber den Radausschnitten nach außen versetzt sind, ergibt sich zwischen den Endabschnitten und den Abschnitten im Bereich der Radhäuser jeweils ein geschwungener Übergang 5, in dem die Längsträger von hinten betrachtet nach unten und innen verlaufen. Wegen dieser Führung neigen die Längsträger in diesem Bereich, wie oben schon erläutert, leicht zum Ausknicken. Zwischen den Endbereichen der Längsträger befindet sich eine zentrale kreisförmige Öffnung 6 im Bodenblech 1, in der eine Mulde für das Ersatzrad aufgenommen wird. Vor dieser Mulde liegt, hier nicht dargestellt, der Tank des Fahrzeuges. Der Anschlußstutzen, der ebenfalls nicht dargestellt ist, liegt in diesem Ausführungsbeispiel oberhalb des Bodenblechs 1 hinter dem rechten Radausschnitt 2. Das Tankrohr zwischen Stutzen und Tank verläuft durch den Radausschnitt hinter einem im Radhaus angeordneten Federbein.

Hinter den Radausschnitten 2, 3 sind an den Seitenkanten des Bodenblechs Seitenwände 7 angeschweißt, die sich unterhalb und oberhalb des Bodenblechs erstrecken. Hinter den Radausschnitten 2, 3 bilden sich daher nach unten offene Kammern aus, die jeweils innen vom Längsträger, aussen von der Seitenwand und oben vom Bodenblech begrenzt werden. Zumindest in der Kammer, die sich auf der Seite mit dem Tankrohr befindet, ist ein Versteifungselement 10 eingesetzt, das anhand der Fig. 2 näher erläutert werden soll.

Das Versteifungselement 10 hat die Form eines Keils mit einer senkrechten verlaufenden Stützwand 11 und einer schräg nach hinten verlaufenden Versteifungswand 12. Die beiden Wände 11, 12 sind an ihrer jeweils unten liegenden Kante miteinander verbunden und aus einem Stück in einem Biegevorgang zu dem dargestellten Keil verformt.

Im oberen Bereich weist die Stützwand 11 zwei seitliche Flansche 13, 15 und einen oberen Flansch 14 auf, die mit der Seitenwand, dem Längsträger bzw. dem Bodenblech verbunden sind. Das freie Ende der Versteifungswand 12 endet ebenfalls in einem Flansch 16 zur Befestigung am Bodenblech, der seitlich in zwei Laschen 17, 18 übergeht, die mit dem Längsträger bzw. mit der Seitenwand verbunden sind. Zur Stabilisierung des Versteifungselementes sind zwei Sicken 20, 21 vorgesehen, die in Längsrichtung verlaufen, und zwar durchgehend'von der Stützwand 11 zur Versteifungswand 12.

Aus Gründen der Gewichtsersparnis und der Versteifung sind in der Versteifungswand 12 zwei Öffnungen 22, 23 mit aufgestelltem Rand vorgesehen, die es außerdem ermöglichen, Schweißwerkzeuge an die Karosserie heranführen zu können. Die Stützwand 11 ist nach innen im unteren Bereich seitlich ausgestellt, an deren oberer Kante des Aufstellbereichs 25 ist ein Flansch 26 angeordnet.

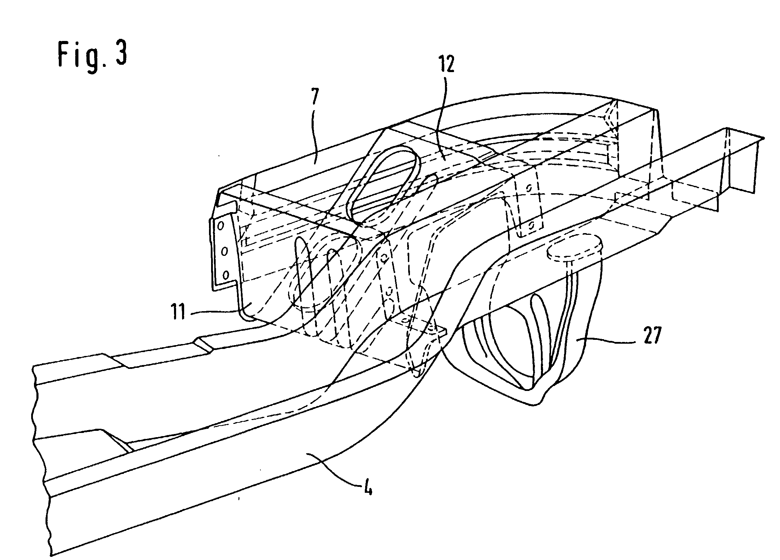

Die Fig. 3 zeigt im folgenden die genaue Einpassung des Versteifungselementes 10 in die Fahrzeugkarosserie. Im Vordergrund erkennt man den Längsträger 4 und im Hintergrund die Seitenwand 7. Nicht dargestellt ist das auf dem Längsträger 4 aufliegende Bodenblech. An den Seitenwänden des Längsträgers ist eine Abschleppöse 27 angeschweißt. Das Versteifungselement 10 befindet sich in der von der Seitenwand 7, dem Längsträger 4 und dem Bodenblech geformten Kammer, wobei die Stützwand 11 den Querschnitt dieser Kammer ausfüllt und an den Radkasten anschließt, so daß sich bei einem Crash die nach vorne weisende Abstützfläche der Stützwand 11 an dem sich im Radkasten befindenden Hinterrad abstützen kann. Die Flansche 13, 14, 15 sind an der Seitenwand 7, dem Bodenblech und der Seitenwand des Längsträgers 4 befestigt. Der Flansch 26 des Aufstellbereichs 25 ist am Boden des Längsträgers 4 befestigt. Die Laschen 18 und 17 am freien Ende der Versteifungswand 12 sind an der Seitenwand 7 bzw. der Seitenwand des Längsträgers 4 befestigt, während der Flansch 16 am freien Ende der Versteifungswand 12 am Bodenblech angeschweißt ist.

Das Versteifungselement 10 versteift insbesondere den Längsträger im Bereich des Ansatzes eines S-förmig verlaufenden Übergangs 5 im Längsträger 4, so daß, wie oben schon erläutert, in einem Crashfall das Versteifungselement 11 abgestützt am Hinterrad diesen Bereich des Längsträgers gegen ein Ausknicken schützt, so daß insgesamt der Radkasten nicht zu stark kollabiert. Auf diese Weise wird das durch den Radkasten geführte Tankrohr vor Beschädigungen geschützt.

## Patentansprüche

1. Vorrichtung zur Versteifung einer Fahrzeugkarosserie im Bereich des hinteren Radhauses, wobei die Fahrzeugkarosserie in diesem Bereich aus einem Bodenblech mit einem seitlichen Radausschnitt und einem unter dem Bodenblech angeordneten, innen an dem Radausschnitt vorbeilaufenden Längsträger besteht, **dadurch gekennzeichnet, daß** seitlich des Längsträgers (4) hinter dem Radhaus ein Versteifungselement (10) angeordnet ist, das eine in etwa senkrecht zum Bodenblech (1) verlaufende, an der hinteren Kante des Radausschnittes anschließende Stützfläche aufweist.

2. Vorrichtung nach Anspruch 1, **dadurch gekennzeichnet, daß** das Versteifungselement eine Stützwand (11) mit der Stützfläche aufweist, die zumindest am Längsträger (4) befestigt ist und mittels einer Strebe (12) am Längsträger abgestützt ist.

3. Vorrichtung nach Anspruch 2, **dadurch gekennzeichnet, daß** die Strebe aus einer weiteren (Versteifungs-) Wand (12) besteht, die an der Unterkante der Stützwand (11) anschließt und sich schräg nach hinten und oben erstreckt.

4. Vorrichtung nach Anspruch 3, **dadurch gekennzeichnet, daß** zumindest eine durchgehende Sicke (20, 21) im Versteifungselement (10) ausgebildet ist, die ausgehend von der Stützwand (11) in die Versteifungswand (12) führt.

5. Vorrichtung nach Anspruch 3 oder 4, **dadurch gekennzeichnet, daß** in der Versteifungswand (12) mindestens eine Öffnung (22, 23) mit aufgestellten Rändern vorgesehen ist.

6. Vorrichtung nach einem der vorhergehenden Ansprüche, **dadurch gekennzeichnet, daß** am Bodenblech (1) eine Karosserieseitenwand (17) angesetzt ist, die eine Verbindung mit dem Versteifungselement (10) aufweist.

7. Vorrichtung nach Anspruch 2, **dadurch gekennzeichnet, daß** die Stützwand (11) im unteren Bereich seitlich ausgestellt ist (Ausstellbereich 25).

## Claims

1. Device for reinforcing a vehicle body in the region of the rear wheel arch, wherein the vehicle body in this region consists of a floor panel with a lateral wheel cutout and a longitudinal member arranged under the floor panel and running past the wheel cutout on the inside, **characterised in that** laterally of the longitudinal member (4) behind the wheel arch is arranged a reinforcing element (10) which comprises a support surface running approximately perpendicularly to the floor panel (1) and adjoining the rear edge of the wheel cutout.

2. Device according to claim 1, **characterised in that** the reinforcing element comprises a support wall (11) with the support surface, which is at least attached to the longitudinal member (4) and supported by means of a strut (12) on the longitudinal member.

3. Device according to claim 2, **characterised in that** the strut consists of a further (reinforcing) wall (12) which adjoins the lower edge of the support wall (11) and extends obliquely rearwards and upwards.

4. Device according to claim 3, **characterised in that** in the reinforcing element (10) is formed at least one continuous bead (20, 21) which, starting from the support wall (11), leads into the reinforcing wall (12).

5. Device according to claim 3 or 4, **characterised in that** in the reinforcing wall (12) is provided at least one opening (22, 23) with upright edges.

6. Device according to any of the preceding claims, **characterised in that** attached to the floor panel (1) is a body side panel (17) which has a connection to the reinforcing element (10).

7. Device according to claim 2, **characterised in that** the support wall (11) in the lower region is laterally pushed out (pushed-out region 25).

## Revendications

1. Dispositif de renforcement d'une carrosserie de véhicule dans la région du passage de roue arrière, la carrosserie de véhicule, dans cette région, étant formée d'une tôle de plancher avec une découpe de passage de roue latérale et un longeron qui est disposé sous la tôle de plancher et s'étend le long de la découpe de passage de roue latérale, côté intérieur, **caractérisé en ce que** sur le côté du longeron (4), derrière le passage de roue, est disposé un élément de renforcement (10) qui présente une surface d'appui sensiblement perpendiculaire à la tôle de plancher (1), raccordée au bord arrière de la découpe de passage de roue.

2. Dispositif selon la revendication 1, **caractérisé en ce que** l'élément de renforcement présente une paroi de support (11) portant la surface d'appui, qui est fixée au moins au longeron (4) et prend appui sur celui-ci par l'intermédiaire d'une jambe de force (12).

3. Dispositif selon la revendication 2, **caractérisé en ce que** la jambe de force comprend une paroi (de renforcement) (12) supplémentaire qui se raccorde au bord inférieur de la paroi de support (11) et s'étend en biais vers l'arrière et vers le haut.

4. Dispositif selon la revendication 3, **caractérisé en ce qu'**au moins une moulure (20, 21) continue est formée dans l'élément de renforcement (10), moulure qui s'étend à partir de la paroi de support (11) dans la paroi de renforcement (12).

5. Dispositif selon la revendication 3 ou 4, **caractérisé en ce qu'**il est prévu dans la paroi de renforcement (12) au moins une ouverture (22, 23) avec des bords relevés.

6. Dispositif selon une des revendications précédentes, **caractérisé en ce qu'**une paroi latérale de carrosserie (17) qui présente une liaison avec l'élément de renforcement (10) est montée sur la tôle de plancher (11).

7. Dispositif selon la revendication 3, **caractérisé en ce que** la paroi d'appui (1), dans sa partie inférieure, est déportée latéralement (zone de déport 25).
